# EUROPEAN PATENT SPECIFICATION

(11) **EP 3 410 052 B1**
(45) Date of publication and mention of the grant of the patent: **27.12.2023**
(21) Application number: 18174738.7
(22) Date of filing: 29.05.2018
(51) Int. Cl.: F27B 7/16, C10B 47/30, C10B 53/02, C10B 57/02

(54) **CARBONIZATION APPARATUS**
VERKOHLUNGSVORRICHTUNG
APPAREIL DE CARBONISATION

(30) Priority: 31.05.2017 JP 2017108083
(43) Date of publication of application: 05.12.2018
(73) Proprietor: Hitachi Zosen Corporation, Osaka-shi, Osaka 559-8559 (JP)
(72) Inventor: SAKAMOTO, Ryoichi, Osaka-shi, Osaka 559-8559 (JP); NAKASHITA, Yoshihiro, Kure-city, Hiroshima 729-2604 (JP)
(74) Representative: Grünecker Patent- und Rechtsanwälte PartG mbB

(56) References cited:
- EP-A1- 0 409 888
- EP-A2- 1 903 292
- JP-A- H11 293 258
- US-B1- 8 388 813

## Description

### Technical Field

The present invention relates to a carbonization apparatus.

### Background Art

As a treatment of livestock excrements, generally performed is a composting treatment for the purpose of recycling of the livestock excrements in a farmland, but it is hard to say that the full amount is effectively used because of restrictions on demand and period and geographical restrictions of supply and demand areas. In recent years, it is required to effectively use organic wastes such as livestock excrements, and Japanese Patent Application Laid-Open Nos. 2010-24091 and 2010-194502 propose a method of making a phosphorus fertilizer material by converting an organic waste into a carbonized material and a method of accumulating (collecting) and recovering a phosphorus compound.

On the other hand, as a carbonization system of organic wastes, in accordance with material properties and use of a carbonized material, known are methods such as a fixed bed type one which is batch type and requires less installation area, a moving bed type one which is continuous type and requires shorter treatment time, an internal heating type one which accompanies combustion of a material, an external heating type one which indirectly heats a material, and the like. Among these methods, in order to carbonize a material on continuous and stable heating conditions and manufacture a carbonized material as a phosphorus fertilizer material with high solubility, an external heating moving bed furnace is suitable. Further, in order to carbonize an irregular organic waste with high moisture content, an external heating rotary kiln is most suitable.

Conventionally, various rotary kilns have been put into practical use or proposed. Japanese Patent Application Laid-Open Nos. 2008-122043, for example, discloses a rotary kiln provided with a plurality of lifters in an axis direction of the kiln body. In the rotary kiln, since the tilt angle of the lifter is different in accordance with a position in the axis direction, it is possible to change a movement speed of a treatment target material and adjust a layer thickness to a desired one for each position. Further, in an external heating rotary kiln disclosed in Japanese Patent Application Laid-Open Nos. 2006-299010, a heating zone through which hot air passes is formed between an inner cylinder and an outer cylinder. Then, by providing a spiral lifter on an outer peripheral surface of the inner cylinder, dust deposited in the heating zone is raked up toward a discharge port.

Incidentally, in the rotary kiln, a stirring blade (lifter) lifts up the treatment target material and then drops it, to thereby stir the treatment target material. Further, with the impact in dropping the treatment target material, the treatment target material is pulverized. In carbonization of the treatment target material, when the treatment target material is pulverized in the vicinity of the discharge port of the rotary kiln, there arises a possibility that the dust of the treatment target material having a smaller particle diameter may be scattered and discharged, being uncarbonized, from the discharge port. In this case, the quality of the generated carbonized material is deteriorated. Further carbonization furnaces are described in EP 0 409 888 A1 and US 8 388 813 B1.

### Summary of Invention

The present invention is intended for a carbonization apparatus for generating a carbonized material from a treatment target material, and it is an object of the present invention to suppress discharge of dust of a treatment target material, being uncarbonized, from a discharge port.

The carbonization apparatus according to the present invention is defined in claim 1.

According to the present invention, it is possible to suppress discharge of dust of the treatment target material, being uncarbonized, from the discharge port.

In one preferred embodiment of the present invention, the at least one feed blade is provided continuously or intermittently along an entire circumference in a circumferential direction about the central axis.

In this case, preferably, the at least one feed blade is provided in a spiral manner.

More preferably, the discharge feed part includes an auxiliary stirring part provided between portions of the at least one feed blade adjacent to each other in the axis direction, for stirring a treatment target material present between the portions, keeping a state where the treatment target material is in contact with the inner surface.

In another preferred embodiment of the present invention, in the plurality of stirring blades, the tilt angle at a portion in contact with the inner surface with respect to the axis direction and a feed speed of the treatment target material in the axis direction gradually become smaller as a position in the axis direction becomes farther away from the charge port.

In still another preferred embodiment of the present invention, the heating part includes a combustion furnace for burning a pyrolysis gas generated from the treatment target material in the furnace body, and an external heating furnace having a cylindrical shape surrounding a periphery of the furnace body and forming a cylindrical space between an outer surface of the furnace body and the external heating furnace, and the external heating furnace includes an inflow port provided on the side of the discharge port in the axis direction, for causing a combustion gas discharged from the combustion furnace to flow into the cylindrical space, and an outflow port provided on the side of the charge port, for causing a combustion gas inside the cylindrical space to flow to the outside.

In this case, preferably, the carbonization apparatus has an outer surface guide part having an outer surface guide blade provided in a spiral manner on an outer surface of the furnace body, for forming a swirling flow of a combustion gas flowing into the cylindrical space and transporting dust deposited inside the cylindrical space in the axis direction with the rotation of the furnace body.

These and other objects, features, aspects and advantages of the present invention will become more apparent from the following detailed description of the present invention when taken in conjunction with the accompanying drawings.

### Brief Description of Drawings

Fig. 1 is a view showing a configuration of a carbonization apparatus;
Fig. 2 is a development view showing an inner surface of a furnace body;
Fig. 3 is a view showing part of a cross section of the furnace body;
Fig. 4 is a development view showing an outer surface of the furnace body;
Fig. 5 is a view showing an appearance of the furnace body;
Fig. 6 is a view showing another example of a stirring part;
Fig. 7 is a view showing another example of a discharge feed part; and
Fig. 8 is a view showing still another example of the discharge feed part.

### Description of Embodiments

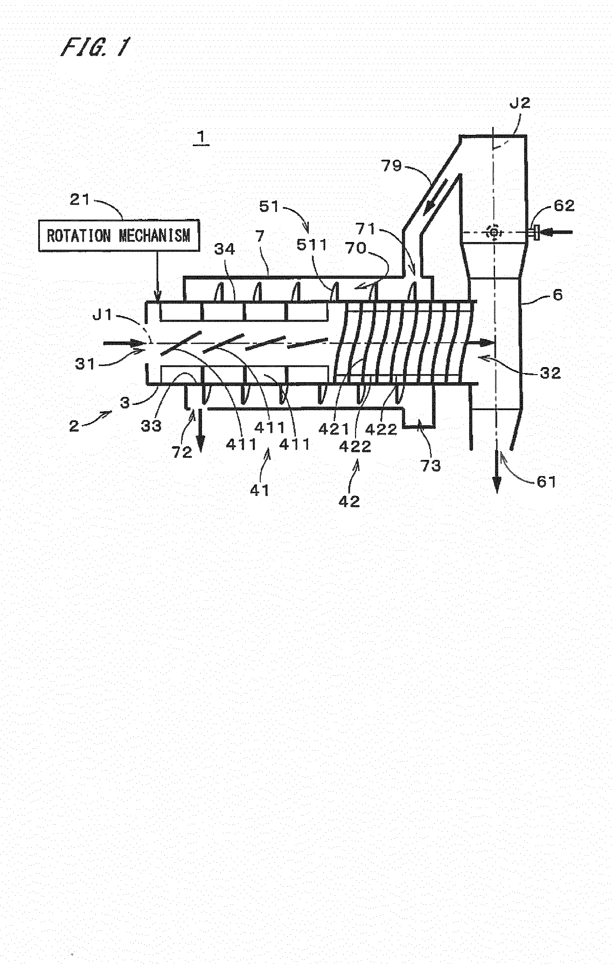

Fig. 1 is a view showing a configuration of a carbonization apparatus 1 in accordance with one preferred embodiment of the present invention. Fig. 1 shows a cross section of a surface including central axes J1 and J2 described later. The carbonization apparatus 1 is an apparatus for generating a carbonized material from a treatment target material which is an organic waste with high moisture content, such as a livestock excrement or the like. An organic waste having a moisture content reduced in advance by aerobic fermentation may be used as the treatment target material. The treatment target material may be a food waste, a wastewater sludge, a general waste, or the like other than the livestock excrement, and various substances may be used as the treatment target material. Further, the carbonized material to be generated by the carbonization apparatus 1 may be used for various purposes.

The carbonization apparatus 1 is an external heating rotary kiln, and includes a carbonization furnace 2, a combustion furnace 6, and an external heating furnace 7. The carbonization furnace 2 decomposes the treatment target material after being dried, into a carbonized material and a pyrolysis gas by reduction heating. The combustion furnace 6 burns the pyrolysis gas containing a combustible gas by supply of combustion air and thereby generate a high-temperature combustion gas (burned gas). The external heating furnace 7 warms the carbonization furnace 2 from the outside by using the combustion gas as a heat source.

The carbonization furnace 2 includes a furnace body 3, a rotation mechanism 21, a stirring part 41, a discharge feed part 42, and an outer surface guide part 51. The furnace body 3 has a cylindrical shape around a first central axis J1 and formed of, for example, a metal material (including an alloy. The same applies to the following). Typically, a cross section of the furnace body 3 perpendicular to the first central axis J1 has a circular form. Only if the shape thereof can be regarded as almost circular, the cross section may have a polygon or the like. The furnace body 3 is rotated about the first central axis J1 by the rotation mechanism 21. The furnace body 3 is provided with a charge port 31 at one end in an axis direction in parallel with the first central axis J1 and provided with a discharge port 32 at the other end. The treatment target material is charged into the furnace body 3 from the charge port 31. The treated treatment target material (i.e., the carbonized material) and the pyrolysis gas in the furnace body 3 are discharged to the outside of the furnace body 3 from the discharge port 32. The furnace body 3, except the charge port 31 and the discharge port 32, is provided with a seal structure for cutting off outside air. In the exemplary case of Fig. 1, the first central axis J1 and the axis direction are horizontal or substantially horizontal. Depending on the design of the carbonization apparatus 1, the first central axis J1 may be tilted with respect to a horizontal direction.

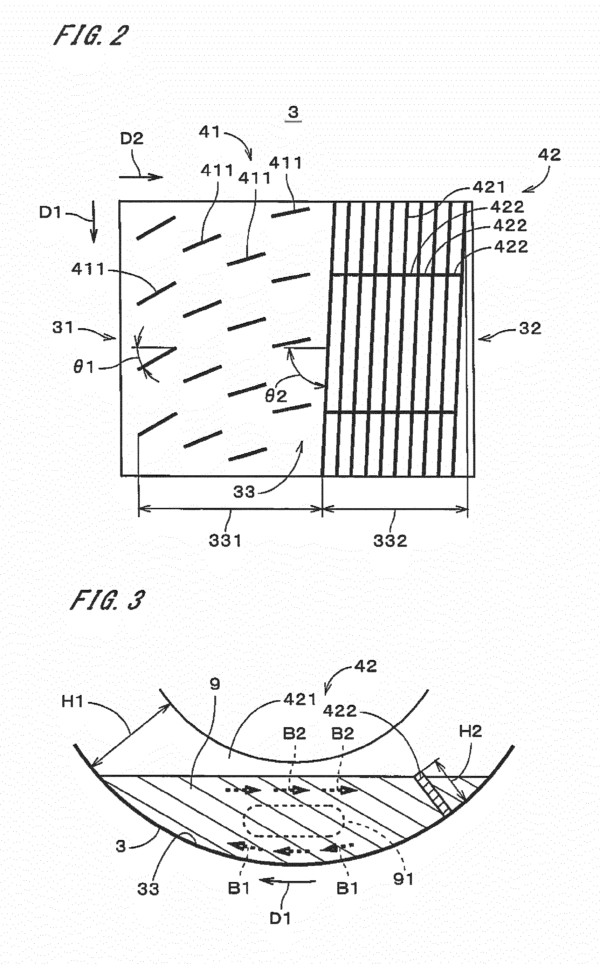

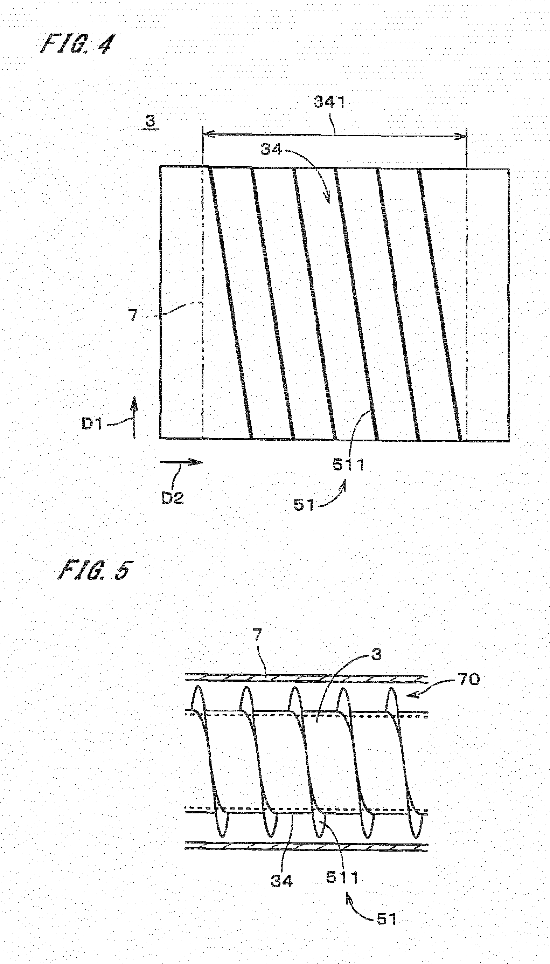

Fig. 2 is a development view showing an inner surface (inner side surface) 33 of the furnace body 3. In Fig. 2, a rotation direction of the furnace body 3 is represented by an arrow with reference sign D1 (the same applies to Figs. 4 and 6 to 8 described later). In the following description, the lower side of Fig. 2 is referred to as a rotation direction front side, and the upper side thereof is referred to as a rotation direction rear side.

The stirring part 41 and the discharge feed part 42 are each formed of, for example, a metal material, and are provided on the inner surface 33 of the furnace body 3. In more detail, on the inner surface 33, the stirring part 41 is provided in an area on the side of the charge port 31 in the axis direction, i.e., an area 331 away from the discharge port 32 (hereinafter, referred to as a "stirring area 331"). The discharge feed part 42 is provided in an area on the side of the discharge port 32 in the axis direction, i.e., an area 332 between the stirring area 331 and the discharge port 32 (hereinafter, referred to as a "discharge feed area 332"). In Fig. 2, respective ranges of the stirring area 331 and the discharge feed area 332 in the axis direction are represented by arrows with the same reference signs. The stirring area 331 and the discharge feed area 332 are continuous in the axis direction. As described later, the treatment target material in the furnace body 3 is fed from the charge port 31 toward the discharge port 32. In Fig. 2, a feed direction of the treatment target material is represented by an arrow with reference sign D2 (the same applies to Figs. 4 and 6 to 8 described later). In the following description, the right side of Fig. 2 is referred to as a feed direction front side, and the left side thereof is referred to as a feed direction rear side.

The stirring part 41 includes a plurality of stirring blades 411. The plurality of stirring blades 411 are arranged along the axis direction (feed direction D2) and a circumferential direction (rotation direction D1) around the first central axis J1. Each of the plurality of stirring blades 411 is, for example, a rectangular flat plate, and is fixed perpendicular to or substantially perpendicular to the inner surface 33 of the furnace body 3. The height of the stirring blade 411 perpendicular to the inner surface 33 is, for example, not smaller than 0.2 times the radius of the furnace body 3 and not larger than 0.4 times the radius. Further, a longitudinal direction of a portion of the stirring blade 411 which is in contact with the inner surface 33 (i.e., a longitudinal direction of a side surface of the flat plate) is tilted with respect to the axis direction. In the following description, the angle at the portion with respect to the axis direction is referred to simply as a "tilt angle". In Fig. 2, the tilt angle of one stirring blade 411 is represented by reference sign θ1.

In each stirring blade 411, a portion on the feed direction rear side is positioned on the rotation direction front side as compared with a portion on the feed direction front side. Therefore, with rotation of the furnace body 3, the treatment target material in the furnace body 3 is fed toward the feed direction front side by the stirring blades 411. At that time, a feed speed of the treatment target material by the stirring blades 411 depends on the tilt angle of the stirring blade 411, and the tilt angle can be regarded as a feed angle. In the exemplary case of Fig. 2, the stirring blades 411 positioned at the same position in the axis direction have the same tilt angle. Further, the stirring blades 411 positioned at different positions in the axis direction have different tilt angles. In a preferable stirring part 41, in the plurality of stirring blades 411, the tilt angle and the feed speed of the treatment target material in the axis direction gradually become smaller as the position in the axis direction becomes farther away from the charge port 31. Further, there may be a case where the stirring area 331 is divided into a plurality of sections in the axis direction and the stirring blades 411 which are included in the same section and positioned at different positions in the axis direction may have the same tilt angle. In other words, the plurality of stirring blades 411 having the tilt angle and the feed speed which gradually become smaller as the position in the axis direction becomes farther away from the charge port 31 may include two or more stirring blades 411 adjacent to each other in the axis direction and having the same tilt angle.

The discharge feed part 42 includes a screw blade 421 and a plurality of auxiliary stirring parts 422. The screw blade 421 is a continuous blade provided in a spiral manner. Paying attention to the circumferential direction about the first central axis 11, the screw blade 421 is provided continuously along an entire circumference in the circumferential direction. Further, paying attention to the axis direction, the screw blade 421 is provided entirely in the discharge feed area 332. Similarly to the stirring blade 411, the screw blade 421 is also fixed perpendicular to or substantially perpendicular to the inner surface 33 of the furnace body 3. In the screw blade 421, the tilt angle at a portion in contact with the inner surface 33 of the furnace body 3 with respect to the axis direction is constant across the whole. In Fig. 2, the tilt angle of the screw blade 421 is represented by reference sign θ2. As described later, the screw blade 421 may be provided intermittently along the entire circumference in the circumferential direction.

Paying attention to parts of the screw blade 421, a portion on the feed direction rear side is positioned on the rotation direction front side as compared with a portion on the feed direction front side. Therefore, with the rotation of the furnace body 3, the treatment target material in the furnace body 3 is fed toward the feed direction front side by the screw blade 421. Thus, the screw blade 421 is a feed blade. Actually, a clearance between the portions of the screw blade 421 which are adjacent to each other in the axis direction is continuous in a spiral manner as a conveyance path, and the treatment target material is carried through the conveyance path. The tilt angle of the screw blade 421 is larger than that of each of the plurality of stirring blades 411. The tilt angle of the screw blade 421 is larger than 45 degrees, and preferably larger than 60 degrees. The tilt angle of the screw blade 421 is smaller than 90 degrees.

Fig. 3 is a view showing part of a cross section of the furnace body 3 perpendicular to the first central axis J1. The height H1 of the screw blade 421 perpendicular to the inner surface 33 is, for example, not smaller than 0.1 times the radius of the furnace body 3 and not larger than 0.3 times the radius. The height H1 of the screw blade 421 is preferably larger than a thickness of a layer 9 of the treatment target material (a thickness at the lowest portion of the furnace body 3), which is indicated by parallel hatch lines in Fig. 3, and is not larger than, for example, twice the thickness of the layer 9.

Each of the auxiliary stirring parts 422 is, for example, a rectangular flat plate, and is provided between the portions of the screw blade 421, which are adjacent to each other in the axis direction, i.e., on the already-described conveyance path. As shown in Fig. 3, the auxiliary stirring parts 422 are fixed perpendicular to or substantially perpendicular to the inner surface 33 of the furnace body 3. The height H2 of the auxiliary stirring part 422 perpendicular to the inner surface 33 is lower than the height H1 of the screw blade 421. For example, the height H2 of the auxiliary stirring part 422 is not smaller than 0.25 times the height H1 of the screw blade 421 and not larger than 0.5 times the height H1.

In Fig. 2, the tilt angle of a portion of the auxiliary stirring part 422 which is in contact with the inner surface 33 is almost 0 degrees. Further, at one position in the circumferential direction, the auxiliary stirring parts 422 are arranged on a straight line extending in the axis direction. Preferably, the auxiliary stirring parts 422 are arranged in the clearances between all the portions of the screw blade 421 which intersects with the straight line. In other words, the auxiliary stirring parts 422 are aligned at the same pitch as the pitch of the screw blade 421. In the exemplary case of Fig. 2, a group of auxiliary stirring parts 422 aligned in the axis direction is regarded as an auxiliary stirring part group, and a plurality of auxiliary stirring part groups are arranged at regular intervals in the circumferential direction. The number of auxiliary stirring part groups is, for example, two to four, but may be one.

Fig. 4 is a development view showing an outer surface (outer side surface) 34 of the furnace body 3, and Fig. 5 is a view showing an appearance of the furnace body 3. In Fig. 4, the upper side is the rotation direction front side and the lower side is the rotation direction rear side. As described later, the outer surface 34 of the furnace body 3, except both ends in the axis direction, is covered with the external heating furnace 7. In Fig. 4, both ends of the external heating furnace 7 in the axis direction are indicated by two-dot chain lines.

The outer surface guide part 51 includes an outer surface guide blade 511. The outer surface guide blade 511 is a continuous blade provided in a spiral manner on the outer surface 34 of the furnace body 3. The outer surface guide blade 511 is formed of, for example, a metal material. Paying attention to the circumferential direction about the first central axis J1, the outer surface guide blade 511 is provided continuously along an entire circumference in the circumferential direction. The outer surface guide blade 511 may be provided intermittently along the entire circumference in the circumferential direction. Assuming that an area 341 covered with the external heating furnace 7 on the outer surface 34 is referred to as a "covered area 341", the outer surface guide blade 511 is provided substantially entirely in the covered area 341 in the axis direction. The entire outer surface guide blade 511 is covered with the external heating furnace 7. The outer surface guide blade 511 is not provided outside the covered area 341.

The outer surface guide blade 511 is fixed perpendicular to or substantially perpendicular to the outer surface 34. In the outer surface guide blade 511, the tilt angle at a portion in contact with the outer surface 34 with respect to the axis direction is constant. The tilt angle of the outer surface guide blade 511 may be determined arbitrarily. Paying attention to parts of the outer surface guide blade 511, a portion on the feed direction rear side is positioned on the rotation direction front side as compared with a portion on the feed direction front side. Therefore, with the rotation of the furnace body 3, dust in the external heating furnace 7 described later is transported toward the feed direction front side by the outer surface guide blade 511. The outer surface guide blade 511 has only to carry the dust in the external heating furnace 7 in the axis direction, and the outer surface guide blade 511 may be provided so that the portion on the feed direction rear side can be positioned on the rotation direction rear side as compared with the portion on the feed direction front side.

As shown in Fig. 1, (a body of) the combustion furnace 6 has a cylindrical shape around a second central axis J2, extending in a vertical direction or a substantially vertical direction. Typically, a cross section of the combustion furnace 6 perpendicular to the second central axis J2 has a circular form. To the combustion furnace 6, connected is an end of the furnace body 3 on the side of the discharge port 32. The combustion furnace 6 and the carbonization furnace 2 preferably have an integral structure. Specifically, the furnace body 3 of the carbonization furnace 2 and the combustion furnace 6 are directly connected to each other, and the discharge port 32 of the furnace body 3 is opened inside the combustion furnace 6. The carbonized material and the pyrolysis gas discharged from the discharge port 32 in the furnace body 3 are directly supplied into the combustion furnace 6. At a lower end of the combustion furnace 6, provided is a carbonized material recovery port 61. The carbonized material dropped from the discharge port 32 is discharged to the outside of the carbonization apparatus 1 through the carbonized material recovery port 61.

The combustion furnace 6 is provided with a supply nozzle 62. The supply nozzle 62 is disposed above the discharge port 32 and jets combustion air into the combustion furnace 6. The combustion air carries out complete combustion of the pyrolysis gas supplied from the carbonization furnace 2 and decomposes a harmful component to thereby generate a high-temperature combustion gas. One end of a hot air duct 79 is attached to an upper portion of the combustion furnace 6 and the combustion gas is discharged from the combustion furnace 6 through the hot air duct 79.

A preferable supply nozzle 62 introduces the combustion air into the combustion furnace 6 along the circumferential direction about the second central axis J2, and forms a swirling flow of the combustion air. The pyrolysis gas suppled from the carbonization furnace 2 and the combustion air are thereby uniformly stirred and mixed. As a result, it is possible to prevent local high-temperature combustion and suppress generation of nitrogen oxide which is a harmful component. A combustion temperature in the combustion furnace 6 is, for example, not lower than 850 degrees.

In the combustion furnace 6, a plurality of supply nozzles 62 may be provided along the circumferential direction. The combustion air and the pyrolysis gas can be thereby more uniformly mixed. Further, a plurality of supply nozzle 62 may be provided along the second central axis J2. In the case where the supply nozzles 62 are provided thus in the direction of the second central axis J2 at a plurality of stages, it becomes possible to carry out combustion of the pyrolysis gas in stages (for example, two-stage combustion). As a result, it is possible to cope with the problem that nitrogen oxide is more easily generated by the high-temperature combustion.

(A body of) the external heating furnace 7 has a cylindrical shape around the first central axis J1 and surrounds a periphery of the furnace body 3 of the carbonization furnace 2. The external heating furnace 7 forms a cylindrical space 70 between the outer surface 34 of the furnace body 3 and itself. In a radial direction around the first central axis J1, the width between the outer surface 34 and the external heating furnace 7, i.e., the width of the cylindrical space 70 is slightly larger than the height of the outer surface guide blade 511. The width of the cylindrical space 70, for example, is not larger than 1.6 times the height of the outer surface guide blade 511. In the external heating furnace 7, an inflow port 71 is provided at the end on the side of the discharge port 32 in the axis direction, and an outflow port 72 is provided at the end on the side of the charge port 31. To the inflow port 71, connected is the hot air duct 79, and the combustion gas discharged from the combustion furnace 6 flows into the cylindrical space 70 through the inflow port 71. The outflow port 72 causes the combustion gas in the cylindrical space 70 to flow to the outside as an exhaust gas. In the external heating furnace 7, the combustion gas flows in a direction opposite to the feed direction of the treatment target material in the furnace body 3, and counter-flow heat exchange is thereby performed. In a temperature distribution in the cylindrical space 70, the temperature gradually becomes lower from the inflow port 71 toward the outflow port 72.

A not-shown thermometer is provided in the vicinity of the inflow port 71. In the hot air duct 79, dilution air can be supplied and the amount of dilution air to be supplied is adjusted so that the temperature of the combustion gas, which is acquired by the thermometer, can become a temperature set in advance. From the inflow port 71, the combustion gas is introduced into the cylindrical space 70 along the circumferential direction about the first central axis J1. As described earlier, on the outer surface 34 of the furnace body 3, provided is the spiral outer surface guide blade 511. In the cylindrical space 70, a swirling flow of the combustion gas along the outer surface guide blade 511 is thereby formed, and the furnace body 3 is uniformly and efficiently heated. A heating temperature of the furnace body 3 is, for example, 400 to 500 t.

In the generation of the carbonized material by the carbonization apparatus 1 of Fig. 1, the treatment target material is charged into the furnace body 3 from the charge port 31. At that time, in a case where the moisture content of the treatment target material is high and a surface of the treatment target material is moist, the treatment target material becomes likely to adhere to the inner surface 33 of the furnace body 3 in the vicinity of the charge port 31. If the treatment target material adheres to the inner surface 33, the efficiency of heat transfer is deteriorated. Therefore, in a preferable carbonization apparatus 1, as shown in Fig. 2, the tilt angle of the stirring blades 411 disposed on the rearest side in the feed direction is made larger and the feed speed of the treatment target material in the vicinity of the charge port 31 is made higher. It is thereby possible to suppress adhesion of the treatment target material to the inner surface 33. The tilt angle of the stirring blades 411 disposed in the vicinity of the charge port 31 is not smaller than 20 degrees and not larger than 45 degrees.

In the stirring area 331, the heat given to the furnace body 3 by the high-temperature combustion gas passing through the cylindrical space 70 is supplied to the treatment target material not only through the inner surface 33 of the furnace body 3 but also through surfaces of the stirring blades 411. Thus, since the heat transfer area is increased by the stirring blades 411, it is possible to efficiently dry the treatment target material. The stirring area 331 can be regarded as a drying area in which the treatment target material is dried.

Further, in the stirring area 331, by giving a tilt angle to the stirring blades 411, the treatment target material is stirred and dried while being fed at a desired speed. Therefore, drying of the treatment target material proceeds as the treatment target material is carried toward the feed direction front side. On the feed direction front side from the center of the stirring area 331 in the axis direction, it is preferable that drying of the inside of a mass of treatment target material is promoted. In this case, in a range not smaller than 5 degrees and not larger than 20 degrees, the tilt angle of the stirring blades 411 is made smaller in stages toward the feed direction front side. These stirring blades 411 disposed on the feed direction front side actively lift the treatment target material and then drops the treatment target material with the rotation of the furnace body 3, to thereby stir the treatment target material. Therefore, a performance of stirring the treatment target material by these stirring blades 411 is higher than that by the stirring blades 411 disposed in the vicinity of the charge port 31. On the other hand, the speed of feeding the treatment target material by the stirring blades 411 on the feed direction front side is lower than that of the stirring blades 411 in the vicinity of the charge port 31. Thus, in an area on the feed direction front side in the stirring area 331, by ensuring a certain degree of retention time, the treatment target material is sufficiently dried in the stirring area 331.

Also in the discharge feed area 332, the heat of the combustion gas is supplied to the treatment target material not only through the inner surface 33 of the furnace body 3 but also through a surface of the screw blade 421. Thus, since the heat transfer area is increased by the screw blade 421, it is possible to efficiently heat the treatment target material. Further, the screw blade 421 having a large tilt angle feeds the treatment target material toward the feed direction front side at a gentle feed speed. Thus, in the screw blade 421, since the feed speed of the treatment target material is regulated, appropriate retention time can be ensured in the discharge feed area 332. As a result, it is possible to sufficiently heat and thermally decompose the treatment target material, i.e., carbonize the treatment target material. The discharge feed area 332 can be regarded as a carbonization area in which the treatment target material is carbonized.

Herein, a carbonization apparatus in accordance with a comparative example is assumed, in which the stirring blades 411 are provided also in the discharge feed area 332 which is the carbonization area on the inner surface 33 of the furnace body 3. In the carbonization apparatus of the comparative example, in the discharge feed area 332, similarly in the stirring area 331, the treatment target material lifted by the stirring blades 411 is dropped onto a bottom of the furnace body 3. At that time, with the impact in dropping, the treatment target material is pulverized. As a result, there arises a so-called short pass in which the dust of the treatment target material having a smaller particle diameter is scattered, being accompanied by a gas passing inside the furnace body 3, up to the discharge port 32. In this case, the dust of the treatment target material is discharged, being uncarbonized, from the discharge port 32. Further, depending on the particle diameter and difference in shape of the treatment target material, there may be case where the feed speed toward the discharge port 32 becomes different. As a result, there is a variation in the quality of the generated carbonized material.

On the other hand, in the carbonization apparatus 1, in the discharge feed area 332 in the vicinity of the discharge port 32, the treatment target material is fed to the discharge port 32, with the rotation of the furnace body 3, by the screw blade 421 having a large tilt angle. Thus, in the vicinity of the discharge port 32, by carrying the treatment target material without actively lifting the treatment target material, it is possible to suppress pulverization of the treatment target material, scatter of the dust, and the short pass. It is thereby possible to suppress discharge of the dust of the treatment target material, being uncarbonized, from the discharge port 32. Further, it is possible to ensure an almost constant retention time of the treatment target material in the discharge feed area 332, not relying on the particle diameter and shape of the treatment target material. As a result, a high-quality and homogeneous carbonized material can be generated.

Further, in the carbonization apparatus 1, by changing the speed of the rotation of the furnace body 3 by the rotation mechanism 21, it is possible to adjust the retention time of the treatment target material in accordance with heating characteristics of the treatment target material. Furthermore, though the height H1 of the screw blade 421 is constant in the furnace body 3 of the present preferred embodiment, the height H1 of the screw blade 421 may be lowered continuously or in stages toward the feed direction front side in accordance with a proceeding of the carbonization in the carbonization area, i.e., a volume reduction of the treatment target material.

In the discharge feed area 332, stirring of the treatment target material is caused mainly by friction among the treatment target material, the inner surface 33 of the furnace body 3, and the screw blade 421. Herein, as shown in Fig. 3, attention is paid to the cross section of the furnace body 3 perpendicular to the first central axis J1. When a thickness of the layer 9 of the treatment target material in Fig. 3 is relatively large, the treatment target material in the vicinity of the inner surface 33 in the layer 9 moves toward the front side of the rotation direction D1 by the friction between the treatment target material and the inner surface 33 with the rotation of the furnace body 3 as shown by an arrow B1 of a thick broken line. Further, the treatment target material retained on the front side of the rotation direction D1 in the layer 9 is carried back to the rear side of the rotation direction D1 while sliding on an upper surface of the layer 9 as shown by an arrow B2 of a thick broken line. In the discharge feed area 332, the treatment target material is carried toward the feed direction front side along the screw blade 421 (along the already-described conveyance path), keeping a state in which the treatment target material is almost in contact with the inner surface 33 at the lowest portion of the furnace body 3.

At that time, at a center portion 91 of the layer 9 surrounded by a broken line in Fig. 3, the stirring of the treatment target material is less caused, and in the external heating type furnace body 3, the heat receiving amount of the treatment target material in the center portion 91 is reduced. Thus, a performance of stirring the treatment target material by the screw blade 421 is lower than that by the stirring blades 411. Then, in a preferable carbonization apparatus 1, in order to assist the stirring performance of the screw blade 421, the already-described auxiliary stirring part 422 is provided. When the auxiliary stirring part 422 passes through the lowest portion of the furnace body 3 with the rotation of the furnace body 3, the treatment target material at the lower portion of the layer 9 is removed, and the treatment target material in the center portion 91 is replaced. It is thereby possible to uniformize the heat receiving amount of the treatment target material in the layer 9 and suppress uneven heating of the treatment target material, which is caused when the treatment target material in the center portion 91 is not replaced. As a result, a more homogeneous carbonized material can be generated.

In the furnace body 3, the carbonized material and the pyrolysis gas generated from the treatment target material are directly supplied into the combustion furnace 6 from the discharge port 32. The carbonized material is recovered through the carbonized material recovery port 61. Further, the combustion gas is generated by combustion of the pyrolysis gas in the combustion furnace 6. Herein, if the carbonization furnace 2 and the combustion furnace 6 are disposed away from each other, the pyrolysis gas is cooled in a duct disposed between both the furnaces, and a heat radiation loss is caused. Furthermore, there may be a possibility that tar contained in the pyrolysis gas is condensed on a wall surface of the duct, the calorific value of the pyrolysis gas is reduced, and a blockage of the duct occurs. On the other hand, in the case where the combustion furnace 6 and the carbonization furnace 2 have an integral structure, it is possible to prevent the reduction in the calorific value of the pyrolysis gas, the blockage of the duct, and the like. Further, size reduction of the carbonization apparatus 1 can be ensured.

Furthermore, in the carbonization apparatus 1, before charging the treatment target material into the furnace body 3, a start-up operation for increasing the temperature of the furnace body 3 to a predetermined temperature is performed. In the start-up operation, predetermined auxiliary fuel is used, but in a normal operation after the start-up operation (after the start of charging the treatment target material), the pyrolysis gas generated from the treatment target material can be used as the whole or part of the heat source for heating the furnace body 3. Thus, by efficiently performing a heat treatment using combustion energy of the pyrolysis gas generated by carbonization reaction, it is possible to effectively use the calorific value contained in the material (treatment target material). As a result, it is possible to eliminate the necessity of the auxiliary fuel or reduce the amount of use of the auxiliary fuel. In the case where an organic waste having a high moisture content is used as the treatment target material, high calorific value is needed to dry the moisture in the waste. Therefore, the carbonization apparatus 1 shown in Fig. 1 which can effectively use the calorific value of the treatment target material is particularly suitable for generating the carbonized material from the organic waste having a high moisture content and it is thereby possible to reduce the cost required for the treatment of the organic waste.

The combustion gas is supplied to the inflow port 71 through the hot air duct 79. As described earlier, in the inflow port 71, the combustion gas is introduced into the cylindrical space 70 along the circumferential direction about the first central axis J1. The swirling flow of the combustion gas is thereby formed in the cylindrical space 70. Further, the spiral outer surface guide blade 511 provided on the outer surface 34 of the furnace body 3 regulates the swirling flow of the combustion gas, to forcedly cause the combustion gas to whirl along the outer surface 34. In the cylindrical space 70, it is thereby possible to prevent the combustion gas from flowing in an almost shortest path (in other words, taking a shortcut) from the inflow port 71 toward the outflow port 72 and increase the efficiency of heat transfer to the furnace body 3. As a result, it is possible to effectively use the energy contained in the combustion gas.

In the combustion gas, dust of the treatment target material scattered from the carbonization furnace 2 and dust caused by the combustion of the pyrolysis gas are mixed, and part of the dust is deposited in the external heating furnace 7. With the rotation of the furnace body 3 and the outer surface guide blade 511, the dust inside the external heating furnace 7 is transported to the feed direction front side. At a bottom of the external heating furnace 7 at an end on the feed direction front side, provided is a dust recovery part 73. The dust transported by the outer surface guide blade 511 is recovered in the dust recovery part 73. The dust inside the dust recovery part 73 is discharged to the outside as appropriate. In a long-term operation of the carbonization apparatus 1, it is thereby possible to prevent deposition of the dust in the cylindrical space 70 from causing a decrease in the efficiency of heat transfer due to a drift of the combustion gas or a blockage of the cylindrical space 70. Further, by reducing the frequency of a maintenance work such as cleaning and the like in the cylindrical space 70, it is possible to reduce the cost required for the maintenance of the carbonization apparatus 1.

In the above-described carbonization apparatus 1, various modifications can be made.

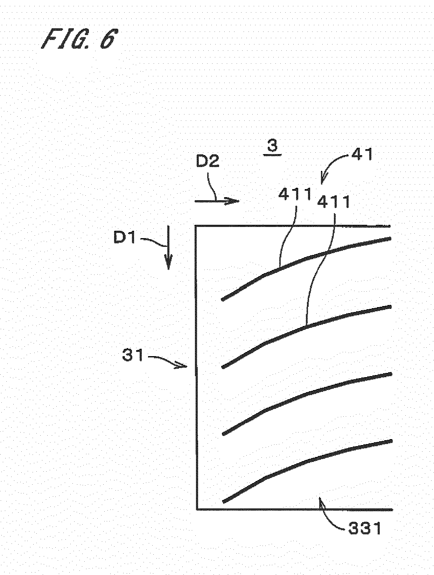

As shown in Fig. 6, in the stirring part 41, the stirring blades 411 may be provided continuously almost entirely in the stirring area 331 in the axis direction. In this case, the plurality of stirring blades 411 are arranged in the circumferential direction. Further, the tilt angle of each stirring blade 411 is changed in stages in the axis direction. Specifically, the tilt angle of the stirring blade 411 gradually becomes smaller toward the feed direction front side. The tilt angle of the stirring blade 411 may be changed continuously in the axis direction.

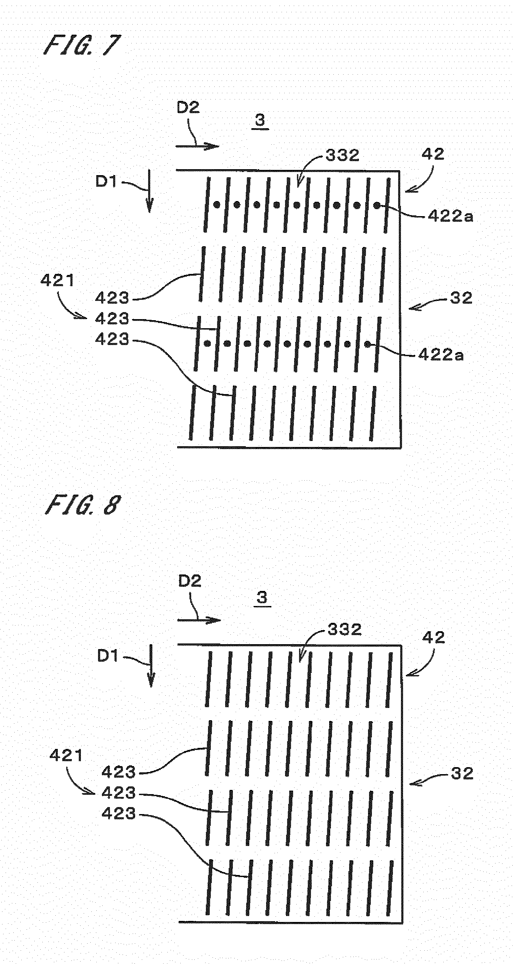

Similarly, in the discharge feed part 42, the tilt angle of the screw blade 421 may be gradually changed along the axis direction. Further, as shown in Fig. 7, the screw blade 421 may be provided intermittently along the entire circumference in the circumferential direction. In Fig. 7, a group of a plurality of feed blades 423 arranged away from one another in a spiral manner is regarded as one screw blade 421. Further, as shown in Fig. 8, the plurality of feed blades 423 each having a tilt angle larger than that of each of the plurality of stirring blades 411 may be arranged in the axis direction and circumferential direction. Also in this case, it is possible to suppress pulverization of the treatment target material, scatter of the dust, and the short pass and thereby possible to suppress discharge of the dust of the treatment target material, which is not carbonized, from the discharge port 32.

Thus, in the discharge feed part 42, various structures can be adopted only if at least one feed blade having a tilt angle larger than that of each of the plurality of stirring blades 411 feeds the treatment target material to the discharge port 32 with the rotation of the furnace body 3. In terms of increasing the heat transfer area to efficiently heat the treatment target material, it is preferable that the at least one feed blade should be continuously or intermittently along the entire circumference in the circumferential direction about the first central axis J1. Further, in order to reliably adjust the feed speed of the treatment target material in the discharge feed area 332, it is preferable that the at least one feed blade should be provided in a spiral manner. As shown in Fig. 2, in the case where the spiral feed blade (screw blade 421) is provided, even if the first central axis J1 of the furnace body 3 is tilted with respect to the horizontal direction to some degree, it is possible to adjust the feed speed of the treatment target material in the discharge feed area 332.

The auxiliary stirring part 422 may have a shape other than the flat plate. As shown in Fig. 7, for example, a pin-like auxiliary stirring part 422a may be provided between portions of the feed blades 423 adjacent to each other in the axis direction. Also in this case, while the state where the treatment target material is in contact with the inner surface 33 of the furnace body 3 is kept, the treatment target material between these portions is stirred by the auxiliary stirring part 422a. It is thereby possible to suppress occurrence of uneven heating of the treatment target material in the discharge feed area 332. Further, the height of the pin-like auxiliary stirring part 422a may be higher than the height H1 of the screw blade 421.

Though a heating part for heating the treatment target material in the furnace body 3 is implemented by the combustion furnace 6 and the external heating furnace 7 in the carbonization apparatus 1 of Fig. 1, there may be a case, for example, where a burner for injecting a flame into the furnace body 3 is provided as the heating part and an internal heating rotary kiln is thereby constituted. Further, depending on the design of the carbonization apparatus 1, heating of the treatment target material in the furnace body 3 may be performed without using the pyrolysis gas generated from the treatment target material.

The configurations in the above-discussed preferred embodiments and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### Reference Signs List

- 1: Carbonization apparatus
- 3: Furnace body
- 6: Combustion furnace
- 7: External heating furnace
- 31: Charge port
- 32: Discharge port
- 33: Inner surface (of furnace body)
- 34: Outer surface (of furnace body)
- 41: Stirring part
- 42: Discharge feed part
- 51: Outer surface guide part
- 70: Cylindrical space
- 71: Inflow port
- 72: Outflow port
- 331: Stirring area
- 332: Discharge feed area
- 411: Stirring blade
- 421: Screw blade
- 422, 422a: Auxiliary stirring part
- 423: Feed blade
- 511: Outer surface guide blade
- J1: Central axis (of furnace body)
- θ1, θ2: Tilt angle

## Claims

1. A carbonization apparatus (1) for generating a carbonized material from a treatment target material, comprising:
a furnace body (3) having a cylindrical shape around a central axis (J1) and rotating about said central axis, provided with a charge port (31) at an one end in an axis direction in parallel with said central axis, from which the treatment target material is charged, and provided with a discharge port (32) at the other end, from which the treated treatment target material is discharged;
a heating part (6, 7) for heating the treatment target material in said furnace body; and
a stirring part (41) provided on an inner surface (33) of said furnace body, for stirring the treatment target material with rotation of said furnace body by using a plurality of stirring blades (411), and
said stirring part is provided in a stirring area (331) away from said discharge port in said axis direction, and
said carbonization apparatus further comprises:
a discharge feed part (42) provided in a discharge feed area (332) between said stirring area and said discharge port in said axis direction on said inner surface, for feeding the treatment target material to said discharge port with the rotation of said furnace body by using at least one feed blade (421, 423),
**characterized in that**
said at least one feed blade having a tilt angle (θ2) at a portion in contact with said inner surface with respect to said axis direction,
said tilt angle (θ2) of said at least one feed blade (421, 423) being larger than that of said plurality of stirring blades (411),
tilt angle (θ1) of stirring blades (411) disposed in the vicinity of the charge port (31) is not smaller than 20 degrees and not larger than 45 degrees, and
tilt angle (θ2) of said at least one feed blade (421) is larger than 45 degrees and smaller than 90 degrees.

2. The carbonization apparatus according to claim 1, wherein
said at least one feed blade (421, 423) is provided continuously or intermittently along an entire circumference in a circumferential direction about said central axis.

3. The carbonization apparatus according to claim 2, wherein
said at least one feed blade (421, 423) is provided in a spiral manner.

4. The carbonization apparatus according to claim 3, wherein
said discharge feed part (42) comprises an auxiliary stirring part (422, 422a) provided between portions of said at least one feed blade adjacent to each other in said axis direction, for stirring a treatment target material present between said portions, keeping a state where the treatment target material is in contact with said inner surface.

5. The carbonization apparatus according to any one of claims 1 to 4, wherein
in said plurality of stirring blades (411), the tilt angle (θ1) at a portion in contact with said inner surface with respect to said axis direction and a feed speed of the treatment target material in said axis direction gradually become smaller as a position in said axis direction becomes farther away from said charge port (31).

6. The carbonization apparatus according to any one of claims 1 to 5, wherein
said heating part (6, 7) comprises:
a combustion furnace (6) for burning a pyrolysis gas generated from the treatment target material in said furnace body; and
an external heating furnace (7) having a cylindrical shape surrounding a periphery of said furnace body and forming a cylindrical space (70) between an outer surface of said furnace body and said external heating furnace, and
said external heating furnace (7) comprises:
an inflow port (71) provided on the side of said discharge port in said axis direction, for causing a combustion gas discharged from said combustion furnace to flow into said cylindrical space; and
an outflow port (72) provided on the side of said charge port, for causing a combustion gas inside said cylindrical space to flow to the outside.

7. The carbonization apparatus according to claim 6, further comprising:
an outer surface guide part (51) having an outer surface guide blade (511) provided in a spiral manner on an outer surface (34) of said furnace body, for forming a swirling flow of a combustion gas flowing into said cylindrical space and transporting dust deposited inside said cylindrical space in said axis direction with the rotation of said furnace body.

## Patentansprüche

1. Carbonisiervorrichtung (1) zum Erzeugen eines cabonisierten Materials aus einem zu behandelnden Material, die umfasst:
einen Ofenkörper (3), der eine zylindrische Form um eine Mittelachse (J1) herum hat und sich um die Mittelachse herum dreht, an einem Ende in einer Achsenrichtung parallel zu der Mittelachse mit einer Eintragöffnung (31) versehen ist, über die das zu behandelnde Material eingetragen wird, und an dem anderen Ende mit einer Austragöffnung (32) versehen ist, über die das behandelte Material ausgetragen wird;
einen Heizteil (6, 7) zum Erhitzen des zu behandelnden Materials in dem Ofenkörper; sowie
einen Rührteil (41), der an einer Innenfläche (33) des Ofenkörpers vorhanden ist, um das zu behandelnde Material bei Drehung des Ofenkörpers unter Verwendung einer Vielzahl von Rührflügeln (411) zu rühren, und
wobei der Rührteil in einem Rührbereich (331) vorhanden ist, der in der Achsenrichtung von der Austragöffnung entfernt ist, und
die Carbonisiervorrichtung des Weiteren umfasst:
einen Austrag-Zuführteil (42), der in einem Austrag-Zuführbereich (332) zwischen dem Rührbereich und der Austragöffnung in der Achsenrichtung an der Innenfläche vorhanden ist, um das zu behandelnde Material der Austragöffnung mit der Drehung des Ofenkörpers unter Verwendung wenigstens eines Zuführflügels (421, 423) zuzuführen,
**dadurch gekennzeichnet, dass**
der wenigstens eine Zuführflügel an einem Abschnitt, der in Kontakt mit der Innenfläche ist, einen Neigungswinkel (θ2) in Bezug auf die Achsenrichtung hat,
wobei der Neigungswinkel (θ2) des wenigstens einen Zuführflügels (421, 423) größer ist als derjenige der Vielzahl von Rührflügeln (411),
der Neigungswinkel (θ1) in der Nähe der Eintragöffnung (31) angeordneter Rührflügel (411) nicht kleiner ist als 20° und nicht größer als 45°, und
der Neigungswinkel (θ2) des wenigstens einen Zuführflügels (421) größer ist als 45° und kleiner als 90°.

2. Carbonisiervorrichtung nach Anspruch 1, wobei
der wenigstens eine Zuführflügel (421, 423) kontinuierlich oder intermittierend entlang eines gesamten Umfangs in einer Umfangsrichtung um die Mittelachse herum vorhanden ist.

3. Carbonisiervorrichtung nach Anspruch 2, wobei
der wenigstens eine Zuführflügel (421, 423) spiralförmig eingerichtet ist.

4. Carbonisiervorrichtung nach Anspruch 3, wobei
der Austrag-Zuführteil (42) einen Zusatz-Rührteil (422, 422a) umfasst, der zwischen Abschnitten des wenigstens einen Zuführflügels vorhanden ist, die in der Achsenrichtung aneinander angrenzen, um ein zwischen den Abschnitten vorhandenes zu behandelndes Material zu rühren, wobei ein Zustand aufrechterhalten wird, in dem das zu behandelnde Material in Kontakt mit der Innenfläche ist.

5. Carbonisiervorrichtung nach einem der Ansprüche 1 bis 4, wobei
bei der Vielzahl von Rührflügeln (411) der Neigungswinkel (θ1) an einem Abschnitt, der mit der Innenfläche in Kontakt ist, in Bezug auf die Achsenrichtung sowie eine Zuführgeschwindigkeit des zu behandelnden Materials in der Achsenrichtung mit zunehmenden Abstand einer Position in der Achsenrichtung zu der Eintragöffnung abnehmen.

6. Carbonisiervorrichtung nach einem der Ansprüche 1 bis 5, wobei der Heizabschnitt (6, 7) umfasst:
einen Verbrennungsofen (6) zum Verbrennen eines aus dem zu behandelnden Material in dem Ofenkörper erzeugten Pyrolysegases; sowie
einen externen Heizofen (7), der eine zylindrische Form hat, die einen Umfang des Ofenkörpers umgibt und einen zylindrischen Raum (70) zwischen einer Außenfläche des Ofenkörpers und dem externen Heizofen bildet, und
der externe Heizofen (7) umfasst:
eine Einlassöffnung (71), die an der Seite der Austragöffnung in der Achsenrichtung vorhanden ist, um zu bewirken, dass ein aus dem Verbrennungsofen ausgetragenes Verbrennungsgas in den zylindrischen Raum einströmt; sowie
eine Auslassöffnung (72), die an der Seite der Eintragöffnung vorhanden ist, um zu bewirken, dass ein Verbrennungsgas im Inneren des zylindrischen Raums nach außen strömt.

7. Carbonisiervorrichtung nach Anspruch 6, die des Weiteren umfasst:
einen Außenflächen-Führungsteil (51) mit einem Außenflächen-Führungsflügel (511), der spiralförmig an einer Außenfläche (34) des Ofenkörpers vorhanden ist, um einen Wirbelstrom eines in den zylindrischen Raum einströmenden Verbrennungsgases auszubilden und den im Inneren des zylindrischen Raums abgelagerten Staub mit der Drehung des Ofenkörpers in der Achsenrichtung zu transportieren.

## Revendications

1. Appareil de carbonisation (1) pour générer un matériau carbonisé à partir d'un matériau cible de traitement, comprenant :
un corps de four (3) ayant une forme cylindrique autour d'un axe central (J1) et tournant autour dudit axe central, pourvu d'un orifice de charge (31) à une extrémité dans une direction axiale parallèle audit axe central, à partir duquel le matériau cible de traitement est chargé, et pourvu d'un orifice de décharge (32) à l'autre extrémité, à partir duquel le matériau cible de traitement traité est déchargé ;
une partie de chauffage (6, 7) pour chauffer le matériau cible de traitement dans ledit corps de four ; et
une partie d'agitation (41) agencée sur une surface interne (33) dudit corps de four, pour agiter le matériau cible de traitement avec rotation dudit corps de four en utilisant une pluralité de pales d'agitation (411), et
ladite partie d'agitation est agencée dans une zone d'agitation (331) éloignée dudit orifice de décharge dans ladite direction axiale, et
ledit appareil de carbonisation comprend en outre :
une partie d'alimentation de décharge (42) agencée dans une zone d'alimentation de décharge (332) entre ladite zone d'agitation et ledit orifice de décharge dans ladite direction axiale sur ladite surface interne, pour alimenter le matériau cible de traitement vers ledit orifice de décharge avec la rotation dudit corps de four en utilisant au moins une pale d'alimentation (421, 423),
**caractérisé en ce que**
ladite au moins une pale d'alimentation a un angle d'inclinaison (θ2) au niveau d'une partie en contact avec ladite surface interne par rapport à ladite direction axiale,
ledit angle d'inclinaison (θ2) de ladite au moins une pale d'alimentation (421, 423) est supérieur à celui de ladite pluralité de pales d'agitation (411),
un angle d'inclinaison (θ1) des pales d'agitation (411) disposées à proximité de l'orifice de charge (31) n'est pas inférieur à 20 degrés et n'est pas supérieur à 45 degrés, et
l'angle d'inclinaison (θ2) de ladite au moins une pale d'alimentation (421) est supérieur à 45 degrés et inférieur à 90 degrés.

2. Appareil de carbonisation selon la revendication 1, dans lequel
ladite au moins une pale d'alimentation (421, 423) est agencée de manière continue ou par intermittence le long d'une circonférence entière dans une direction circonférentielle autour dudit axe central.

3. Appareil de carbonisation selon la revendication 2, dans lequel
ladite au moins une pale d'alimentation (421, 423) est agencée d'une manière en spirale.

4. Appareil de carbonisation selon la revendication 3, dans lequel
ladite partie d'alimentation de décharge (42) comprend une partie d'agitation auxiliaire (422, 422a) agencée entre des parties de ladite au moins une pale d'alimentation adjacentes les unes aux autres dans ladite direction axiale, pour agiter un matériau cible de traitement présent entre lesdites parties, en maintenant un état où le matériau cible de traitement est en contact avec ladite surface interne.

5. Appareil de carbonisation selon l'une quelconque des revendications 1 à 4, dans lequel
dans ladite pluralité de pales d'agitation (411), l'angle d'inclinaison (θ1) au niveau d'une partie en contact avec ladite surface interne par rapport à ladite direction axiale et une vitesse d'alimentation du matériau cible de traitement dans ladite direction axiale deviennent progressivement plus petits à mesure qu'une position dans ladite direction axiale s'éloigne dudit orifice de charge (31).

6. Appareil de carbonisation selon l'une quelconque des revendications 1 à 5, dans lequel
ladite partie de chauffage (6, 7) comprend :
un four de combustion (6) pour brûler un gaz de pyrolyse généré à partir du matériau cible de traitement dans ledit corps de four ; et
un four de chauffage externe (7) ayant une forme cylindrique entourant une périphérie dudit corps de four et formant un espace cylindrique (70) entre une surface externe dudit corps de four et ledit four de chauffage externe, et
ledit four de chauffage externe (7) comprend :
un orifice d'afflux (71) agencé sur le côté dudit orifice de décharge dans ladite direction axiale, pour amener un gaz de combustion déchargé dudit four de combustion à s'écouler dans ledit espace cylindrique ; et
un orifice d'échappement (72) agencé sur le côté dudit orifice de charge, pour amener un gaz de combustion à l'intérieur dudit espace cylindrique à s'écouler vers l'extérieur.

7. Appareil de carbonisation selon la revendication 6, comprenant en outre :
une partie de guidage de surface externe (51) ayant une pale de guidage de surface externe (511) agencée d'une manière en spirale sur une surface externe (34) dudit corps de four, pour former un écoulement tourbillonnant d'un gaz de combustion s'écoulant dans ledit espace cylindrique et transporter de la poussière déposée à l'intérieur dudit espace cylindrique dans ladite direction axiale avec la rotation dudit corps de four.
